# EUROPÄISCHE PATENTSCHRIFT

(11) **EP 2 648 824 B1**
(45) Veröffentlichungstag und Bekanntmachung des Hinweises auf die Patenterteilung: **07.09.2016**
(21) Anmeldenummer: 11790926.7
(22) Anmeldetag: 21.11.2011
(51) Int. Cl.: B01D 53/00, B01D 5/00, B01D 8/00, F04B 37/08

(54) **KÜHLFALLE MIT GEKÜHLTER, GEOMETRISCH DURCHLÄSSIGER DURCHGANGSEINRICHTUNG**
COOLING TRAP COMPRISING A COOLED TRANSIT DEVICE WHICH IS PERMEABLE IN GEOMETRICAL TERMS
PIÈGE RÉFRIGÉRANT DOTÉ D'UN DISPOSITIF DE PASSAGE GÉOMÉTRIQUEMENT PERMÉABLE ET REFROIDI

(30) Priorität: 09.12.2010 DE 102010061144
(43) Veröffentlichungstag der Anmeldung: 16.10.2013
(73) Patentinhaber: GSI Helmholtzzentrum für Schwerionenforschung GmbH, 64291 Darmstadt (DE)
(72) Erfinder: HACKLER, Thomas, 65428 Rüsselsheim (DE); KOLLMUS, Holger, 60599 Frankfurt (DE); BENDER, Markus, 65375 Oestrich-Winkel (DE); VÖLKLEIN, Friedemann, 65527 Niedernhausen (DE)
(86) Internationale Anmeldenummer: PCT/EP2011/070573
(87) Internationale Veröffentlichungsnummer: WO 2012/076324

(56) Entgegenhaltungen:
- EP-A1- 0 847 790
- DE-U1- 8 707 036
- FR-A1- 2 760 977
- US-A- 3 423 947
- US-A- 5 687 575
- US-A1- 2001 007 174
- US-A1- 2006 086 247

## Beschreibung

Die Erfindung betrifft eine Fremdstoffabscheidevorrichtung zur Abscheidung insbesondere gasförmiger Verunreinigung durch Sorption. Die Erfindung betrifft weiterhin eine Pumpvorrichtung mit zumindest einer ersten Pumpeneinrichtung sowie zumindest einer zweiten Pumpeneinrichtung.

In der Technik kommt es sehr häufig vor, dass bei einer technischen Vorrichtung zwei unterschiedliche Teilbereiche auf bestimmte Weise voneinander getrennt werden müssen, weil der erste Teilbereich (de facto) zwingend das Vorhandensein eines bestimmten Materials oder Betriebsmittels voraussetzt, auf das der andere, mit dem ersten Teilbereich verbundene, zweite Teilbereich nachteilig reagiert, oder dort sogar Schäden auftreten können. Das Gleiche gilt sinngemäß für zwei miteinander verbundene technische Einheiten.

Ein einfaches, alltägliches Beispiel hierfür stellt eine einfache Kaffeemaschine dar. Bei dieser wird Wasser elektrisch aufgeheizt. Während auf einer Seite der Heizeinrichtung somit das Vorhandensein von Wasser (nämlich das aufzuheizende Frischwasser) zwingend erforderlich ist, ist das Vorhandensein von Wasser im elektrischen Teil der Heizvorrichtung - also den Heizwendeln - nachteilig und würde beispielsweise zu einem Kurzschluss oder dergleichen führen. Demzufolge müssen beide Teilbereiche (Wasserleitungsrohr und Heizspiralen) elektrisch voneinander isoliert werden, andererseits jedoch thermisch miteinander in Kontakt stehen. Dies wird durch das Vorsehen einer thermisch leitfähigen, elektrisch isolierenden Trennwand erreicht.

Größere Probleme treten jedoch auf, wenn die beiden Teilbereiche beziehungsweise die beiden Komponenten fluidisch miteinander verbunden sein müssen. Denn in einem solchen Fall ist das einfache Anbringen einer Trennwand (wie dies im oben erläuterten Beispiel einer Kaffeemaschine der Fall ist) nicht möglich.

Ein Beispiel für eine derartige Anforderung hierfür liegt im Vakuumbereich, wo einerseits Vakuumpumpen verwendet werden, die bewegte Teile aufweisen und dementsprechend geschmiert werden müssen (zum Beispiel Drehschieberpumpen sowie Turbomolekularpumpen) oder - wie im Beispiel von Diffusionspumpen - sonstige Betriebsmittel und/oder Betriebshilfsmittel erfordern. Dementsprechend kann es in diesem Bereich zum Vorhandensein von Kohlenwasserstoffen (Schmiermittel beziehungsweise Öl bei Öldiffusionspumpen), aber auch Quecksilber und sonstige Substanzen (insbesondere bei Diffusionspumpen) kommen. Da jede Substanz einen gewissen Dampfdruck aufweist, liegen die entsprechenden Stoffe nicht nur in flüssiger Form vor, sondern zu einem gewissen Teil auch in gasförmiger Form.

Diese Substanzen sind jedoch in der Regel vakuumseitig in hohem Maße unerwünscht, selbst wenn sie nur mit sehr niedrigen (Partial-) Drücken vorkommen. So können beispielsweise die Kohlenwasserstoffe das Vakuum deutlich bis hin zur Unbrauchbarkeit verschlechtern. Auch können zum Beispiel Kohlenwasserstoffe auch Detektoren oder andere Bauarten von Vakuumpumpen (insbesondere solche, die auf einem anderen Grundprinzip beruhen, wie beispielsweise so genannte Getterpumpen) nachteilig beeinflussen, beschädigen oder sogar zerstören. Somit ist also so weit wie möglich der Übertritt von Kohlenwasserstoffen oder sonstigen Substanzen zwischen den Vakuumpumpen und dem eigentlichen Vakuumbereich zu unterbinden.

Gleichzeitig besteht die zwangsläufige Forderung, dass der eigentliche Vakuumbereich und die Vakuumpumpen fluidisch miteinander verbunden sein müssen. Denn wenn eine solche-fluidische Verbindung nicht vorhanden wäre, dann könnte kein (zu pumpendes) Gas zur Vakuumpumpe gelangen und somit kein Vakuum im Vakuumbereich aufgebaut werden.

Demzufolge müssen Abscheidevorrichtungen zwischen Vakuumpumpen und Vakuumbereich vorgesehen werden, welche bestimmte Stoffe fluidisch hindurch lassen (insbesondere das eigentliche zu pumpende Gas), andere Stoffe (insbesondere Kohlenwasserstoffe und dergleichen) jedoch wirksam ausfiltern.

In der Praxis haben sich hierfür bei Vakuumanwendungen so genannte "Kühlfallen" bewährt. Diese beruhen auf dem physikalischen Prinzip, dass unterschiedliche Substanzen eine unterschiedliche Verdampfungstemperatur aufweisen. Vom Prinzip her weisen derartige Kühlfallen eine oder mehrere gekühlte Oberflächen auf. Die Temperatur der gekühlten Oberfläche ist dabei so gewählt, dass das Material, welches nicht durch die Kühlfalle hindurch treten darf, möglichst weitgehend an der abgekühlten Oberfläche auskondensiert und gegebenenfalls an dieser festfriert. Dadurch wird ein Übergang des betreffenden Materials von der einen Seite der Kühlfalle auf die andere Seite weitgehend verhindert. Gleichzeitig sollte die Temperatur der gekühlten Fläche so hoch sein, dass das Material, welches auch weiterhin durch die Kühlfalle hindurchtreten, soll (beispielsweise zu pumpende Luft oder sonstige Gase, insbesondere vakuumrelevante Gase) möglichst ungehindert durch die Kühlfalle hindurchgehen kann.

Im Vakuumbereich haben sich Kühlfallen, die mit flüssigem Stickstoff gekühlt werden, weitestgehend durchgesetzt. Flüssiger Stickstoff ist relativ kostengünstig verfügbar und weist eine für die Verwendung bei Kühlfallen in der Vakuumtechnik besonders geeignete Verdampfungstemperatur auf, die bei -195 °C liegt. Bei dieser niedrigen Temperatur frieren insbesondere Kohlenwasserstoffe zu einem großen Anteil aus und frieren darüber hinaus ausreichend "fest" an der betreffenden gekühlten Oberfläche der Kühlfalle an. Nachteilig ist jedoch bei derartigen, mit flüssigem Stickstoff gekühlten Kühlfallen, dass der Betriebsstoff "flüssige Stickstoff' kontinuierlich verdampft und daher regelmäßig nachgefüllt werden muss. In der Praxis geschieht dies häufig dadurch, dass der jeweilige Experimentator in regelmäßigen Abständen (beispielsweise alle 30 Min.) von Hand flüssigen Stickstoff in den Vorratsbehälter der Kühlfälle nachfüllt. Dies ist insofern problematisch, da der Experimentator zu diesen Zeitpunkten nicht für andere Aufgaben zur Verfügung steht. Darüber hinaus ist stets auch das Risiko gegeben, dass der Experimentator das Nachfüllen von flüssigem Stickstoff versehentlich vergisst. Zwar existieren auch automatische Nachfüllanlagen, diese sind jedoch zum Teil nicht ausreichend betriebssicher (zum Beispiel durch das festfrieren von Ventilen). Ist das Vorhandensein einer ausreichenden Menge von flüssigem Stickstoff nicht gewährleistet, können die in der Kühlfalle gebundenen Substanzen (insbesondere Kohlenwasserstoffe) in einem vergleichsweise kurzen Zeitraum freigesetzt werden, was zu einer Verschmutzung des Vakuumteils der Anordnung führen kann.

Zur Vermeidung derartiger Probleme wurde bereits die Verwendung von Kühlfallen vorgeschlagen, die mit Peltier-Elementen gekühlt werden.

So wurde beispielsweise im Artikel "Applications of the Peltier Effect" von J. E. Parrott und A. W. Penn in der Zeitschrift AEI Engineering vom Juli/August 1962 auf Seite 207 die Verwendung von Peltier-Efementen in Verbindung mit einer Diffusionspumpe vorgeschlagen. In diesem Zusammenhang wird jedoch die mit Peltier-Elementen realistischerweise erzielbare, vergleichsweise hohe Kühltemperatur als problematisch erkannt. Dementsprechend wird die Verwendung von Kühlblechen (Englisch: "Baffle") vorgeschlagen, die den durch die Kühlfalle hindurchtretenden Luftstrom mäanderförmig umlenkt. Auf diese Weise soll der Nachteil der hohen Kühlflächentemperatur durch eine entsprechend, lange und nicht direkt durchgängige, gewundene Führung der hindurchtretenden Luft kompensiert werden, um so überhaupt eine funktionstüchtige Anordnung realisieren zu können.

Ein ähnlicher Vorschlag wurde im Artikel "Principles of thermoelectric devices" von H. J. Goldsmid im British Journal of Applied Physics, Vol. 11, Juni 1960, Seite 209 gemacht. Auch hier wurde die Verwendung von "baffles" in Verbindung mit Peltier-Elementen vorgeschlagen, um den Nachteil der hohen Temperatur durch eine ausreichend lange, mäanderförmige Wegstrecke des hindurchgehenden Gases zumindest teilweise zu kompensieren.

In der US-Patentschrift US 5,687,575 wird eine mit Peltier-Elementen gekühlte kryostatische Pumpe beschrieben, mit der Rest-Wassermoleküle aus einer Probe entfernt werden können, bevor diese einem Massenspektrometer zugeführt wird. Die kryostatische Pumpe besteht im Wesentlichen aus einem Eingangsflansch, einer Wärmesenke aus Kupfer, die eine quadratische Öffnung aufweist, vier Peltier-Elementen, einem Kupferrohr mit quadratischem Querschnitt und niedriger Temperatur, sowie einem Ausgangsflansch.

In der französischen Offenlegungsschrift FR 2 760 977 A1 ist eine Entfeuchtungseinrichtung mit thermoelektrischen Elementen beschrieben. Die Einrichtung weist eine innere Kammer und ein Gehäuse mit senkrechten Außenwänden auf, wobei zwischenliegend Peltier-Elemente angeordnet sind. Verunreinigtes Gas wird der Kammer über eine Öffnung tangential zugeführt. Im Inneren der Kammer entsteht eine rotierende Gasströmung, wobei das Gas die Kammer über eine obenliegende Öffnung verlässt. Die an der Wand auskondensierten Partikel fließen durch eine untenliegende Öffnung über ein dort vorgesehenes Filter oder Sieb ab.

Dass dieses Problem der zu hohen Kühltemperatur als überaus kritisch angesehen wurde, zeigt sich daran, dass trotz der Zeitspanne von mehreren Jahrzehnten, die zwischen den Erstvorschlägen, Peltier-Elemente für Kühlfallen zu verwenden, und dem heutigen Tage liegen, nach wie vor de facto ausschließlich mit flüssigem Stickstoff gekühlte Kühlfallen verwendet werden. Dieser de facto-Ausschluss von Peltier-Elementen bei Kühlfallen findet dabei wohlweislich auch bei der Verwendung von "baffles" statt, also Blechen, die den vorbeiströmenden Luftstrom mäanderförmig ablenken, um dadurch in der Kühlfalle eine besonders große Fläche an gekühlten Oberflächen bereitzustellen.

Speziell im Fall von geometrisch durchlässigen Durchgangseinrichtungen werden daher derzeit praktisch ausschließlich Kühlfallen verwendet, welche mit flüssigem Stickstoff gekühlt werden. Dies, obwohl derartige, mit flüssigem Stickstoff gekühlte Kühlfallen die bereits oben erwähnten Probleme aufweisen.

Die Aufgabe der Erfindung besteht somit darin, eine gegenüber dem Stand der Technik verbesserte Fremdstoffabscheidevorrichtung zur Abscheidung insbesondere gasförmiger Verunreinigungen durch Sorption vorzuschlagen, welche gegenüber im Stand der Technik bekannten Fremdstoffabscheidevorrichtungen verbessert ist. Weiterhin besteht die Aufgabe der Erfindung darin, eine gegenüber dem Stand der Technik verbesserte Pumpvorrichtung zur Verfügung zu stellen.

Dazu wird vorgeschlagen, eine Fremdstoffabscheidevorrichtung zur Abscheidung insbesondere gasförmiger Verunreinigungen durch Sorption, die zumindest eine gekühlte Sorptionsfläche mit zumindest einer als PeltierKühleinrichtung ausgebildeten betriebsmittelverbrauchsfreien Kühleinrichtung aufweist, wobei die zumindest eine gekühlte Sorptionsfläche zumindest eine geometrisch durchlässige Durchgangseinrichtung bildet, die zwischen zwei Anschlussbereichen der Fremdstoffabscheidevorrichtung angeordnet ist, und die als Öffnung oder als Serie von Öffnungen ausgebildet ist, derart dass zumindest eine unmittelbare, geradlinige Verbindung zwischen den zwei Anschlussbereichen durch die Durchgangseinrichtung hindurch vorhanden ist, die für den mittigen Durchhang eines geradlinigen Teilchenstrahls mit einer Dicke von 0,5 cm geeignet ist, ohne dass dieser auf ein Hindernis prallt, derart auszubilden, dass die zumindest eine gekühlte Sorptionsfläche zumindest einen Hinterschneidungsbereich in Bezug auf die zumindest eine geradlinige Verbindung der zumindest einen geometrisch durchlässigen Durchgangseinrichtung aufweist. Bei den gasförmigen Verunreinigungen kann es sich beispielsweise um Kohlenwasserstoffe, Quecksilber und dergleichen handeln. Insbesondere kann es sich um Stoffe handeln, die sich an sich bei den üblichen Umgebungsbedingungen unterhalb ihres Siedepunkts befinden und an sich (zu einem größeren Teil) in fester und/oder flüssiger Phase vorliegen sollten. Dennoch kann sich auch unter derartigen Umgebungsbedingungen (ein gewisser Anteil) der entsprechenden Substanz in einer gasförmigen Phase befinden. Unter einer geometrisch durchlässigen Durchgangseinrichtung ist eine Anordnung zu verstehen, bei der zumindest eine unmittelbare, geradlinige Verbindung zwischen den beiden Teilen, die durch die Fremdstoffabscheidevorrichtung verbunden werden, besteht. Dabei handelt es sich um eine Öffnung (zum Beispiel einer Art Blende) beziehungsweise eine Serie von derartigen Öffnungen. Auch kann die Durchgangseinrichtung nach Art eines Rohres oder dergleichen ausgebildet sein. Dies schließt es jedoch nicht aus, dass gegebenenfalls eine oder eine Mehrzahl von Fenstereinrichtungen entlang des geometrisch durchlässigen Durchgangs vorgesehen wird. Wenn beispielsweise ein Lichtstrahl durch die geometrisch durchlässige Durchgangseinrichtung geschickt wird, so ist das Vorsehen eines (gegebenenfalls mit einem oder einer größeren Anzahl an Löchern versehenen) Fensters ohne weiteres denkbar. Entsprechendes kann auch beispielsweise bei einem Teilchenstrahl gelten, wenn ein beziehungsweise eine Mehrzahl von Fenstern, die für den Teilchenstrahl durchgängig sind, vorgesehen ist beziehungsweise wird. Möglich ist es dabei insbesondere, dass die Fenster für andere Substanzen ein Hindernis darstellen, beziehungsweise für diese Substanzen (im Wesentlichen) undurchlässig sind. Unter einer Sorptionsfläche kann eine im Wesentlichen beliebig ausgebildete Oberflächeneinrichtung verstanden werden. Diese kann insbesondere eine gewisse Oberflächenstruktur aufweisen (zum Beispiel kühlkörperartig geformt sein, Furchen beziehungsweise Vorsprünge aufweisen und dergleichen) oder flach ausgebildet sein. Weiterhin kann die Oberflächeneinrichtung eine Oberflächenkrümmung aufweisen, beziehungsweise eben ausgebildet sein. Auch kann die Oberflächeneinrichtung in grundsätzlich beliebiger Weise aus einem oberflächenglatten Material oder einem rauen und/oder einem porösen Material gefertigt sein. Die vorab genannten Ausbildungen können selbstverständlich auch miteinander kombiniert werden, sodass sich beispielsweise glatte, strukturierte Oberflächenabschnitte mit porösen, ebenen Oberflächenabschnitten abwechseln. Weiterhin kann die Oberflächeneinrichtung (zumindest teilweise) mit einer speziellen Beschichtung versehen sein, beispielsweise einer Lackierung, einer aufgesputterten Oberfläche, einer chemisch sorbierenden Oberfläche oder dergleichen. Rein beispielhaft kann für die Ausbildung von zumindest Teilen der Sorptionsfläche ein Metall beziehungsweise eine Metalllegierung verwendet werden, wie beispielsweise Kupfer, Silber, Stahl, Edelstahl (gegebenenfalls auch Legierungen aus/mit diesen Materialien) und dergleichen. Insbesondere die zuletzt genannten Materialien weisen eine üblicherweise ausreichende gute bis besonders vorteilhafte thermische Leitfähigkeit sowie eine große Vakuumtauglichkeit und/oder eine große Vakuumdichtigkeit auf. Die Sorptionsfläche kann weiterhin in grundsätzlich beliebiger Weise Teil einer Kühleinrichtung sein (beispielsweise der zumindest einen betriebsmittelverbrauchsfreien Kühleinrichtun) Möglich ist es aber auch, dass es sich bei der Sorptionsfläche um eine gesonderte (gegebenenfalls zunächst unabhängig ausgebildete) Einrichtung handelt, die vorzugsweise thermisch gut leitend mit einem geeigneten Teil einer Kühleinrichtung (insbesondere einer betriebsmittetverbrauchsfreien Kühleinrichtung) verbunden ist. Unter einer betriebsmittelverbrauchsfreien Kühleinrichtung ist eine Kühleinrichtung zu verstehen, welche (im Wesentlichen) kein "materiebehaftetes" Betriebsmittel zum Kühlbetrieb benötigt. Bei einem derartigen Betriebsmittel kann es sich beispielsweise um ein verflüssigtes Gas handeln, welches die erforderliche Kühlleistung durch Verdampfung (und damit insbesondere durch Aufnahme latenter Wärme) erzeugt. Denkbar ist jedoch auch, dass beispielsweise ein stark gekühltes Medium umgewälzt wird (Kühlmittelkreislauf). Dagegen ist ein "nichtmateriebehaftetes" Betriebsmittel, wie elektrischer Strom, eine mechanisch wirkende Kraftübertragungseinrichtung und dergleichen, üblicherweise nicht als ein Betriebsmittel in vorliegend gemeintem Sinne zu verstehen. Weiterhin ist darauf hinzuweisen, dass unter einem Betriebsmittel üblicherweise Betriebsmittel zu verstehen sind, deren Einsatz und deren Verbrauch im Wesentlichen miteinander gekoppelt sind. Hiervon zu unterscheiden sind Betriebshilfsmittel, wie beispielsweise Schmierstoffe oder dergleichen, obgleich diese gegebenenfalls auch in einem gewissen Umfang verbraucht werden können. Selbstverständlich ist es auch möglich (und vorteilhaft), wenn für die zumindest eine betriebsmittelverbrauchsfreie Kühleinrichtung auch (im Wesentlichen) keine Betriebshilfsmittel verbraucht werden. Die "Betriebsmittelverbrauchsfreiheit" bezieht sich dabei insbesondere auf die Kühleinrichtung als solche (also insbesondere den Bereich, in dem der Hauptwärmeübergang) erfolgt. Demgegenüber ist es beispielsweise in der Regel unschädlich, wenn im "Vorlauf" und/oder im "Nachlauf" (insbesondere im "Nachlauf") zur eigentlichen Kühleinrichtung betriebsmittelverbrauchsbehaftete Vorrichtungen (wie beispielsweise unterstützend für die Kühleinrichtung wirken können) zur Anwendung kommen. Beispielsweise soll es möglich sein, dass die Wärmeabgabeseite der eigentlichen Kühleinrichtung mit einem Kühlwasserkreislauf verbunden werden kann (der als solcher üblicherweise als betriebsmittelverbrauchsbehaftete Vorrichtung aufzufassen ist).

Beider zumindest einen betriebsmittetverbrauchsfreien Kühleinrichtung der Fremdstoffabscheidevorrichtung handelt es sich um eine elektrisch betriebene Kühleinrichtung, nämlich um eine Peltier-Kühleinrichtung. Gerade elektrische Energie ist bei üblichen Aufbauten üblicherweise ohnehin vorhanden beziehungsweise vorzusehen. Von daher kann die in der Regel "ohnehin in der Nähe befindliche" elektrische Energie problemlos auch für den Betrieb der Kühleinrichtung genutzt werden. Auch ansonsten kann elektrische Energie in aller Regel besonders leicht auch ansonsten schwer zugänglichen Bereiche zugeführt werden. Hierzu könnten beispielsweise kommerziell leicht erhältliche flexible elektrische Kabel verwendet werden. Peltier-Elemente werden als (Teil der) Kühleinrichtung verwendet. Diese sind kommerziell erhältlich, erzeugen auf besonders einfache Weise (insbesondere ohne mechanisch bewegte Teile) Kälte und können darüber hinaus relativ große Temperaturdifferenzen (typischerweise im Bereich von ΔT=30-70 °C, insbesondere im Bereich von ΔT=40-60 °C) erzeugen. Ein weiterer Vorteil von Peltier-Elementen (oder sonstigen Bauteilen, welche keine oder nur wenige mechanisch bewegte Bauteile aufweisen) ist, dass diese keine oder nur wenig Vibrationen erzeugen, die ihrerseits nachteilig für zumindest manche Experimente sind.

Vorteilhaft ist es weiterhin, wenn bei der Fremdstoffabscheidevorrichtung eine Mehrzahl von Kühleinrichtungen vorgesehen wird, welche vorzugsweise zumindest teilweise sequenziell zueinander angeordnet sind. Mit einer (gegeberienfalls durchaus vorteilhaften) Parallelanordnung von Kühleinrichtungen ist es insbesondere in der Regel möglich, dass die zur Verfügung stehende Kühlleistung erhöht wird. Dies kann sich bei manchen Anwendungen als vorteilhaft erweisen. Darüber hinaus kann sich durch eine Parallel-Anordnung von Kühleinrichtungen eine erhöhte Betriebssicherheit durch Redundanzeffekte ergeben. Zusätzlich oder alternativ ist es auch möglich, dass Kühleinrichtungen sequenziell zueinander angeordnet sind. Durch eine derartige, sequenzielle Anordnung lässt sich oftmals die durch die Kühleinrichtung erzeugbare Temperaturdifferenz erhöhen. Werden beispielsweise zwei oder mehr Peltier-Elemente sequenziell zueinander angeordnet, so addieren sich die durch ein einzelnes Peltier-Element erzeugbaren Temperaturdifferenzen von typischerweise. ΔT=50 °C zwar nicht zur Summe von ΔT=100 °C (da gewisse Verluste auftreten); dennoch lässt sich beim erwähnten Beispiel typischerweise eine Gesamt-Temperaturdifferenz von ΔT=84-94°C erreichen (die exakten Werte können normalerweise den Datenblättern der Peltier-Elemente entnommen werden). Dadurch können gegebenenfalls besonders niedrige Temperaturen erzeugt werden, so dass ein größerer Anteil an gasförmigen Verunreinigungen abgeschieden wird und/oder diese "fester" an der betreffenden Sorptionsfläche festfrieren.

Eine weitere besonders bevorzugte Ausbildungsform der Fremdstoffabscheidevorrichtung kann sich ergeben, wenn die zumindest eine geometrisch durchlässige Durchgangseinrichtung der Fremdstoffabscheidevorrichtung, zumindest teilweise und/oder zumindest bereichsweise als differenzielle Kühlfallen-Einrichtung ausgebildet ist. Mit einem derartigen Aufbau kann ein besonders großer Anteil der (unerwünschten) gasförmigen Verunreinigungen, die durch die Kühlfallen-Einrichtung abzuscheiden sind, abgeschieden werden. Hierdurch kann der beispielsweise von einer mit Öl geschmierten Pumpe beabstandet liegende Vakuumbereich besonders sauber" sein (also insbesondere einen besonders niedrigen Anteil an gasförmigen Kohlenwasserstoffverbindungen aufweisen). Unter einer differenziellen Kühlfallen-Einrichtung ist ein Aufbau zu verstehen, bei dem mehrere Sorptionsflächen in Gasdurchströmungsrichtung gesehen hintereinander angeordnet sind. Die einzelnen Stufen werden dabei in der Regel zunehmend "sauberer". Mit anderen Worten wird üblicherweise der größte Anteil der Kohlenwasserstoffe in der ersten Stufe abgeschieden, sodass die Restverunreinigung mit Kohlenwasserstoffen sukzessive abnimmt. Möglich (aber nicht unbedingt erforderlich) ist es darüber hinaus, wenn die Temperaturen der einzelnen Stufen der Kühlfallen-Einrichtung (zumindest teilweise) eine unterschiedliche Temperatur aufweisen. Dabei ist es denkbar, dass die Temperaturen der einzelnen Kühlfällenbereiche, ausgehend von der beispielsweise mit Öl geschmierten Pumpe zunehmend kälter werden. Denkbar ist aber auch der umgekehrte Fall, sodass die Bereiche zunehmend wärmer werden. Auch ist es möglich, dass die einzelnen Bereiche anfänglich wärmer und anschließend wieder kälter beziehungsweise anfänglich kälter und danach wieder wärmer werden.

Weiterhin ist es bevorzugt, wenn bei der Fremdstoffabscheidevorrichtung die zumindest eine geometrisch durchlässige Durchgangseinrichtung, insbesondere die zumindest eine gekühlte Sorptionsfläche, zumindest teilweise und/oder zumindest bereichsweise Flachelemente, insbesondere zumindest teilweise und/oder zumindest bereichsweise gebogene Flachelemente und/oder zumindest eine zumindest bereichsweise gekrümmte Begrenzungskante aufweist. Unter Zuhilfenahme derartiger Flachelemente kann ein retativ leichter Aufbau mit einer großen Sorptionsoberfläche relativ leicht realisiert werden. Insbesondere eine große Sorptionsfläche ermöglicht es in der Regel, dass ein großer Anteil der abzuscheidenden Verunreinigungen abgeschieden werden kann und/oder dass die Fremdstoffabscheidevorrichtung relativ lange betrieben werden kann, ohne dass diese zwischenzeitlich regeneriert werden muss (was üblicherweise mit der Notwendigkeit eines Abschaltens der Gesamtanlage einhergeht). Insbesondere durch eine gebogene und/oder mit gekrümmten Begrenzungskanten versehene Ausbildung der Flachelemente (oder einer sonstigen Sorptionsfläche) kann die Fremdstoffabscheidevorrichtung besonders gut an bestimmte räumliche Zwangsbedingungen angepasst werden. Weiterhin ist es Dank der vorgeschlagenen Ausbildung in der Regel möglich, dass eine relativ kompakte Anordnung realisiert werden kann, wobei die Anordnung insbesondere in Strahlrichtung gesehen (beziehungsweise in Fluiddurchgangsrichtung gesehen) besonders kompakt gehalten werden kann. Insbesondere bei einer (nachträglichen) Integration in bestehende Anlagen steht gerade in dieser Richtung üblicherweise relativ wenig Bauraum zur Verfügung. Somit kann die vorgeschlagene Fremdstoffabscheidevorrichtung oftmals als "Snap-In"-Lösung verwendet werden.

Wie erwähnt weist bei der Fremdstoffabscheidevorrichtung die zumindest eine gekühlte Sorptionsfläche zumindest einen Hinterschneidungsbereich auf. Mit einer derartigen Bauausführung ist es in der Regel möglich, eine (nochmalige) Vergrößerung der Sorptionsfläche bei weiterhin relativ kompakten Abmessungen der gesamten Fremdstoffabscheidevorrichtung erzielen zu können (insbesondere hinsichtlich einer Abmessung in Teilchenstrahlrichtung beziehungsweise in Fluiddurchgangsrichtung gesehen). Weiterhin können bei der Verwendung von Hinterschneidungsbereichen auch gasförmige Verunreinigungen, welche sich entlang einer Flugbahn bewegen, die einen gewissen Winkel zur Achse der geometrisch durchlässigen Durchgangseinrichtung aufweisen (welche üblicherweise im Wesentlichen parallel zu einer Teilchenstrahlrichtung beziehungsweise zur Strömungsrichtung des durchströmenden Gases verläuft) besonders zuverlässig und dauerhaft entfernt werden, da es dadurch möglich wird, dass das entsprechende Partikel mit einem relativ stumpfen Winkel auf einer Sorptionsfläche auftreffen kann (und somit gegebenenfalls mit einer erhöhten Wahrscheinlichkeit haften bleibt) und/oder das Teilchen besonders weit entfernt von der geometrisch durchlässigen Achse sorbiert werden kann (was von Vorteil sein kann, da speziell im Bereich der geometrisch durchlässigen Durchgangseinrichtung häufiger höhere Temperaturen auftreten können).

Weiterhin wird vorgeschlagen, dass die Fremdstoffabscheidevorrichtung, insbesondere die zumindest eine geometrisch durchlässige Durchgangseinrichtung, besonders bevorzugt die zumindest eine gekühlte Sorptionsfläche zumindest bereichsweise zumindest eine Zwischenwandeinrichtung aufweist. Die zumindest eine Zwischenwandeinrichtung ist dabei vorzugsweise zumindest zeitweise und/oder zumindest bereichsweise gekühlt ausgeführt. Unter "Zwischenwandeinrichtung" ist dabei eine Wandeinrichtung zu verstehen, welche nicht benachbart zu einem Endbereich der geometrisch durchlässigen Durchgangseinrichtung angeordnet ist. Es kann sich also insbesondere um eine Wandeinrichtung handeln, welche in einem Zwischenbereich, insbesondere in der Mitte einer geometrisch durchlässigen Durchgangseinrichtung der Fremdstoffabscheidevorrichtung beziehungsweise einer geometrisch durchlässigen Durchgangseinrichtung eines Teilbereichs einer Fremdstoffabscheidevorrichtung ausgebildet ist. Selbstverständlich ist es möglich, dass pro Fremdstoffabscheidevorrichtung und/oder pro Teilbereich zumindest einer Fremdstoffabscheidevorrichtung eine Mehrzahl von Zwischenwandeinrichtungen vorgesehen wird. Lediglich der Vollständigkeit halber sollte darauf hingewiesen werden, dass es nicht zwangsweise erforderlich ist, dass in einem Endbereich der Fremdstoffabscheidevorrichtung und/oder in einem Endbereich zumindest eines Teilbereichs zumindest einer Fremdstoffabscheidevorrichtung "Endwandeinrichtungen" vorgesehen werden müssen. Eine Zwischenwandeinrichtung kann beispielsweise als eine Art Flachelement ausgebildet, sein, welches gegebenenfalls auch mit einer mittigen Durchbohrung versehen sein kann. Bei Verwendung einer oder mehrerer derartiger Zwischenwandeinrichtungen ist es in der Regel möglich, bei nach wie vor kompakten Außenabmessungen der Fremdstoffabscheide-Vorrichtung, die innere Sorptionsoberfläche zum Teil spürbar zu erhöhen und zusätzlich oder alternativ eine größere Anzahl an Hinterschneidungsbereichen vorzusehen.

Eine weitere bevorzugte Ausführungsform der Fremdstoffabscheidevorrichtung kann sich ergeben, wenn zumindest eine geometrisch durchlässige Durchgangseinrichtung zumindest zwei Baugruppen aufweist, welche insbesondere zumindest teilweise und/oder zumindest bereichsweise ähnlich zueinander, bevorzugt zumindest teilweise und/oder zumindest bereichsweise gleichartig zueinander ausgebildet sind. Beispielsweise ist es möglich, dass auf diese Weise eine Mehrzahl an Fremdstoffabscheidevorrichtungsteilen in Fluiddurchgangsrichtung beziehungsweise in Teilchenstrahldurchgangsrichtung der geometrisch durchlässigen Durchgangseinrichtung hintereinander angeordnet werden. Hierdurch kann sich die Gesamteffektivität der Gesamt-Fremdstoffabscheidevorrichtung gegebenenfalls erhöhen. Durch den vorgeschlagenen modularen Aufbau kann sich jedoch die Konstruktion der Anordnung vereinfachen. Insbesondere ist es auch möglich, die Fremdstoffabscheidevorrichtung besonders einfach auf unterschiedliche Bauraumvorgaben, insbesondere in Längsrichtung der zumindest einen geometrisch durchlässigen Durchgangseinrichtung anzupassen. Zusätzlich oder alternativ ist es jedoch auch möglich, dass die Fremdstoffabscheidevorrichtung entlang einer (oder mehrerer) Ebenen unterteilt ist, welche parallel zu zumindest einer geometrisch durchlässigen Durchgangseinrichtung verläuft (beziehungsweise verlaufen). Auf diese Weise ist es gegebenenfalls möglich, durch eine höhersymmetrische Ausbildung der Anordnung eine bessere Abscheidungswirkung für gasförmige Verunreinigungen zu erzielen. Auch ist es (bei üblicherweise relativ geringem Aufwand) möglich, mit Hilfe einer derartigen Ausbildung eine besonders einfache "Parallelanordnung" von betriebsmittelverbrauchsfreien Kühleinrichtungen (wie Peltier-Elementen) zu realisieren. Weiterhin hat es sich in ersten Versuchen als vorteilhaft erwiesen, wenn die Fremdstoffabscheidevorrichtung zumindest ein Abwärmeabführmittel aufweist, welches bevorzugt mit zumindest einer betriebsmittelverbrauchsfreien Kühleinrichtung thermisch verbunden ist. Aufgrund von physikalischen Gesetzmäßigkeiten ist es nicht möglich, an einem Punkt einfach "nur" Kälte zu erzeugen. Vielmehr haben Kühleinrichtungen die Eigenschaft, dass sie an einem Punkt Wärme abziehen und die dort abgezogene Wärmeenergie (plus Wärmeenergie durch sonstige Einträge) an einem anderen Punkt abgeben. Dies kann zu einer (zu) starken Erhitzung an einem Punkt der Kühleinrichtung führen, wodurch beispielsweise die Kühlleistung vermindert wird und/oder sogar eine Beschädigung der Kühleinrichtung auftreten kann. Von daher kann es sich als erforderlich erweisen, dass die von der Kühleinrichtung "transportierte" Abwärme von einem oder mehreren Abwärmeabführmitteln weiter abgeführt wird. Bei den Abwärmeabführmitteln kann es sich um aktive und/oder passive Abwärmeabführmittel handeln. Bei aktiven Abwärmeabführmitteln kann es sich beispielsweise um weitere Kühleinrichtungen (die nicht notwendigerweise vom gleichartigen Typ sein müssen) handeln. Üblicherweise ist es jedoch von Vorteil, wenn hier zumindest zum Teil passive Abwärmeabführmittel verwendet werden, wie beispielsweise wärmeleitende Einrichtungen (Wärmeleitpaste, Metallstücke, Kühlkörper, thermische Verbindung zu einem Kühlwasserkreislauf und dergleichen). Auf diese Weise kann eine besonders gute Wärmeabführung durch die Kühleinrichtung auch über lange Zeiten und bei hoher Kühlleistung sichergestellt werden. Auch Beschädigungen durch thermische Belastungen können so in der Regel effektiv verhindert werden.

Eine weitere bevorzugte Ausbildungsform kann sich ergeben, wenn bei der Fremdstoffabscheidevorrichtung zumindest eine Verbindung zumindest zweier Bauelemente untereinander, insbesondere zumindest eine thermische Verbindung zumindest zweier Bauelemente untereinander zumindest teilweise und/oder zumindest bereichsweise unter Verwendung von formschlüssigen Verbindungen und/oder von kraftschlüssigen Verbindungen und/oder von Haftmitteln und/oder von Andruckmitteln erfolgt. Erste Versuche haben ergeben, dass sich auf diese Weise eine relativ einfach auszuführende Verbindung realisieren lässt, die dennoch über gute mechanische und/oder thermische Eigenschaften verfügen kann. Als formschlüssige Verbindungen können sämtliche, an sich im Stand der Technik bekannte formschlüssige Verbindungen verwendet werden. Insbesondere im Zusammenhang mit formschlüssigen Verbindungen können zu deren (mechanischer) Verstärkung und/oder zu deren (fluidischer) Abdichtung beispielsweise Klebstoffe, Lötmittel, Schweißverbindungen, Hartlötverbindungen, Wärmeleitpasten und dergleichen verwendet werden. Aber auch deren Verwendung als Haftmittel in "Alleinstellung" kann sich gegebenenfalls als vorteilhaft erweisen. Auch die Verwendung von bestimmten Epoxidharzen (die verblüffenderweise durchaus gute Vakuumeigenschaften aufweisen können) ist überraschenderweise möglich. Insbesondere ist bei der Verwendung von Epoxidharzen auf eine gute Verarbeitungsweise zu achten (beispielsweise Vermeidung von Lufteinschlüssen). Die Verwendung von Andruckmitteln und/oder kraftschlüssigen Verbindungen schließt insbesondere die Kraftbeaufschlagung durch Federelemente, Spiralfedereinrichtungen und dergleichen ein. Ein besonderer Vorteil bei der Verwendung von Andruckmitteln und/oder von kraftschlüssigen Verbindungen ist insbesondere, dass diese üblicherweise leicht und/oder im Wesentlichen beschädigungsfrei wieder voneinander getrennt werden können. Dies kann insbesondere Vorteile bei der Wartung und/oder beim Austausch von defekten Bauteilen haben.

Weiterhin ist es von Vorteil, wenn bei der Fremdstoffabscheidevorrichtung zumindest Teile der Fremdstoffabscheidevorrichtung zumindest bereichsweise vakuumgeeignet und/oder zumindest bereichsweise vakuumdicht ausgebildet sind. Hierdurch wird insbesondere die Verwendung im Zusammenhang mit Vakuumeinrichtungen (sämtliche Vakuumarten einschließlich Hochvakuum (HV), Ultrahochvakuum (UHV) und Extremhochvakuum (XHV)) möglich. Insbesondere bei Vakua hoher Güte dürfen die verwendeten Materialien nicht zu Ausgasungen neigen und sollten darüber hinaus auch ausheizbar sein. Darüber hinaus sollten die entsprechenden Materialien ausreichend diffusionsfest, auch gegenüber leicht diffundierenden Gasen sein. Derartige Materialien sind grundsätzlich an sich bekannt. Insbesondere sind Metalle, wie Stahl, Kupfer (einschließlich deren Legierungen) und dergleichen geeignet.

Weiterhin wird eine Pumpvorrichtung vorgeschlagen, welche zumindest eine erste Pumpeneinrichtung sowie zumindest eine zweite Pumpeneinrichtung aufweist, wobei die zumindest eine erste Pumpeneinrichtung und die zumindest eine zweite Pumpeneinrichtung zumindest teilweise und/oder zumindest bereichsweise unter Verwendung einer Fremdstoffabscheidevorrichtung mit dem oben beschriebenen Aufbau miteinander verbunden sind. Die Pumpvorrichtung weist dann die bereits beschriebenen Vorteile und Eigenschaften in analoger Weise auf. Insbesondere ist es möglich, dass als erste Pumpeneinrichtung eine Pumpeneinrichtung verwendet wird, welche mechanisch bewegliche Teile aufweist und/oder mit Hilfe von Schmiermitteln arbeitet. Hier sind beispielsweise Drehschieberpumpen, Turbomolekularpumpen und dergleichen zu nennen. Auch sind als erste Pumpeneinrichtung Pumpenbauformen denkbar, welche mit einem flüssigen beziehungsweise gasförmigen Betriebsstoff arbeiten, wie insbesondere Diffusionspumpen (zum Beispiel Öldiffusionspumpen, Quecksilberdiffusionspumpen und dergleichen). Selbstverständlich ist auch an eine Anordnung mehrerer Pumpen (zum Beispiel eine serielle Anordnung mehrerer Pumpen mit unterschiedlich hoher erzielbarer Vakuumgüte zu denken. Rein beispielsweise wäre hier eine Reihenfolge aus einer Drehschieberpumpe und einer Turbomolekularpumpe denkbar. Als zweite Pumpeneinrichtung ist insbesondere eine Pumpeneinrichtung denkbar, welche (quasi im "Gegensatz" zur ersten Pumpeneinrichtung) empfindlich oder in Form von Beschädigung auf das Vorhandensein (einer höheren Konzentration) von Betriebsmitteln reagiert, die insbesondere bei der ersten Pumpeneinrichtung verwendet werden. In diesem Zusammenhang ist insbesondere an Getterpumpen und/oder an Kryopumpen zu denken. Darüber hinaus ist es auch durchaus denkbar, dass als zweite Pumpeneinrichtung Pumpeneinrichtungen verwendet werden, welche beispielsweise mechanisch bewegliche Teile aufweisen, aber dennoch (im Wesentlichen) ohne Schmiermittel arbeiten. Rein beispielhaft sollen in diesem Zusammenhang magnetgelagerte Turbomolekularpumpen genannt sein. Durch die Anordnung der vorgeschlagenen Fremdstoffabscheidevorrichtung zwischen der ersten Pumpeneinrichtung (beziehungsweise den ersten Pumpeneinrichtungen) und der zweiten Pumpeneinrichtung (beziehungsweise den zweiten Pumpeneinrichtungen) können die unterschiedlichen Pumpenbauformen auf vorteilhafte Weise miteinander verknüpft werden, ohne dass es zu negativen Wechselwirkungen zwischen diesen kommen muss.

Im Folgenden wird die Erfindung anhand vorteilhafter Ausführungsbeispiele und unter Bezugnahme auf die beigefügte Zeichnung näher erläutert. Es zeigen:
- Fig. 1:: ein erstes Ausführungsbeispiel für eine Kühlfalle mit Peltier-Elementen im schematischen Querschnitt;
- Fig. 2:: unterschiedliche Anordnungsmöglichkeiten für ein Peltier-Element mit Sorptionsflächen in einer Vakuumapparatur, jeweils im schematischen Querschnitt;
- Fig. 3:: ein zweites Ausführungsbeispiel für eine Kühlfalle mit Peltier-Elementen in seitlicher, schematischer Draufsicht;
- Fig. 4:: das in Fig. 3 gezeigte zweite Ausführungsbeispiel einer Kühlfalle in schematischer, perspektivischer Ansicht;
- Fig. 5:: das in den Fig. 3 und 4 dargestellte zweite Ausführungsbeispiel einer Kühlfalle mit Peltier-Elementen in schematischer Draufsicht von vorne;
- Fig. 6:: ein drittes Ausführungsbeispiel für eine Kühlfalle mit Peltier-Elementen in schematischer Teildraufsicht von vorne;
- Fig. 7:: eine Pumpenanordnung mit zwei unterschiedlich ausgebildeten Pumpen und einer dazwischenliegenden Kühlfalle in einer schematischen Querschnittsansicht.

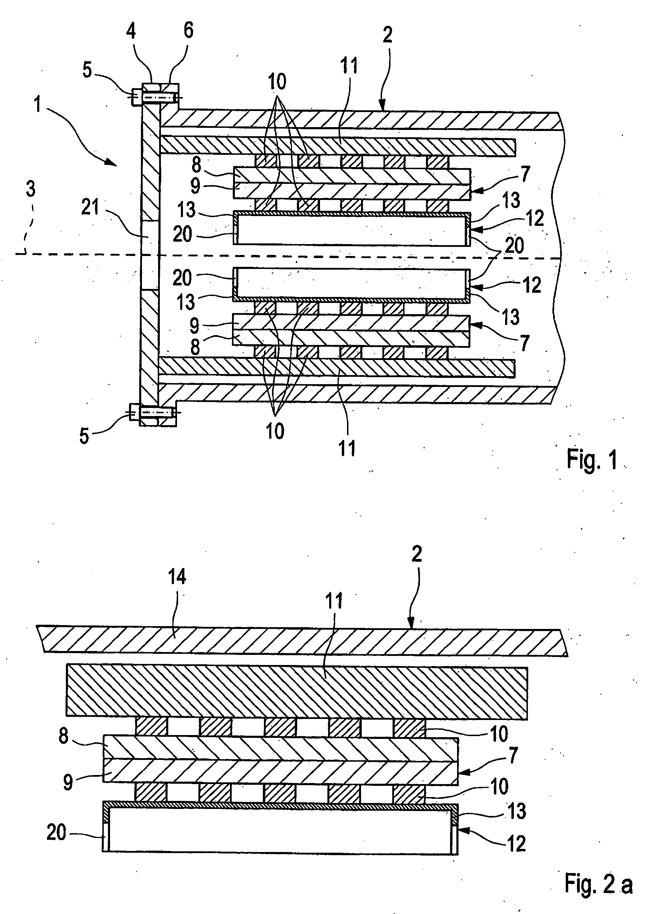

In Fig. 1 ist ein erstes mögliches Ausführungsbeispiel für eine Kühlfalle 1 in einem seitlichen Prinzipquerschnitt dargestellt. Das in Fig. 1 dargestellte Ausführungsbeispiel weist einen relativ einfachen Aufbau auf, ist jedoch gut funktionstüchtig.

Die Kühlfalle 1 ist in einer sogenannten Beam-Pipe 2 angeordnet, also einem Rohr, durch das ein Teilchenstrahl 3 hindurchläuft. Der Teilchenstrahl 3 ist in Fig. 1 durch eine gestrichelte Linie angedeutet. Beispielsweise kann es sich bei den Teilchen des Teilchenstrahls 3 um Schwerionen (beziehungsweise gegebenenfalls auch um Ionen, welche eine größere Masse als Protonen aufweisen), wie beispielsweise Heliumionen, Neonionen oder Kohlenstoffionen handeln. Grundsätzlich sind jedoch auch andere Teilchen denkbar, und zwar nicht nur Hadronen, sondern auch beispielsweise Leptonen. Es ist auch denkbar, dass anstelle eines Teilchenstrahls 3 ein gerichteter Strahl des elektromagnetischen Spektrums vorliegt. In der Praxis kann dies beispielsweise auftreten, wenn ein kreisförmiger Teilchenbeschleuniger zur Erzeugung von Synchrotronstrahlung verwendet wird. Hierzu können (müssen jedoch nicht notwendigerweise) so genannte Undulatoren verwendet werden.

Wie man Fig. 1 entnehmen kann, ist die dort dargestellte Kühlfalle 1 am Ende einer Beam-Pipe 2 angeordnet, also kurz bevor der Teilchenstrahl 3 den in Fig. 1 rechts befindlichen Hochvakuumbereich, in dem der Teilchenstrahl 3 erzeugt und beschleunigt wird, verlässt. Die Kühlfalle 1 ist daher im vorliegend dargestellten Ausführungsbeispiel einteilig mit einer Flanschplatte 4 ausgebildet, die mit Hilfe mehrerer Schrauben 5 vakuumdicht am endständig ausgebildeten Flansch 6 der Beam-Pipe 2 verbunden werden kann.

Die Flanschplatte 4 dient darüber hinaus der Wärmeabfuhr der Wärme, die von den vorliegend insgesamt zwei Peltier-Elementen 7 auf deren jeweiliger Warmseite 8 freigesetzt wird. Die an der Warmseite 8 der Peltier-Elemente 7 freigesetzte Wärme wird über eine thermisch gut leitfähige Befestigung 10 an die beiden Halteelemente 11 übertragen, die die von den Peltier-Elementen 7 herrührende Wärme in Richtung der Flanschplatte 4 weiterleitet, wo sie schließlich an die umgebende Raumluft abgegeben wird. Auch wird in aller Regel der mechanische Kontakt zwischen Flanschplatte 4 und Flansch 6 der Beam-Pipe 2 in einem solchen Ausmaß thermisch leitfähig sein, dass auch die Beam-Pipe 2 in einem größeren Umfang Wärme an die Umgebung abführen kann. Die Flanschplatte 4 und die Halteelemente 11 sind vorzugsweise aus einem thermisch ausreichend bis gut leitfähigen Metall, wie beispielsweise Stahl oder Kupfer, gefertigt. Die thermisch leitfähige Befestigung 10 ist im vorliegend dargestellten Ausführungsbeispiel durch einen vakuumfähigen Klebstoff realisiert. Auch können im Markt erhältliche vakuumgeeignete Epoxidharze hierzu verwendet werden. Aber auch andere Haltemechanismen können genutzt werden, wie beispielsweise eine Befestigung durch Schrauben. Um eine zusätzliche thermische Leitfähigkeit zu realisieren, können auch zusätzlich oder alternativ federnde, im unbelasteten Zustand gebogene Metallplättchen eingelegt werden, die sich unter einem Anpressdruck verbiegen und einen guten thermischen Kontakt zu den Halteelementen 11 beziehungsweise den Peltier-Elementen 7 realisieren können.

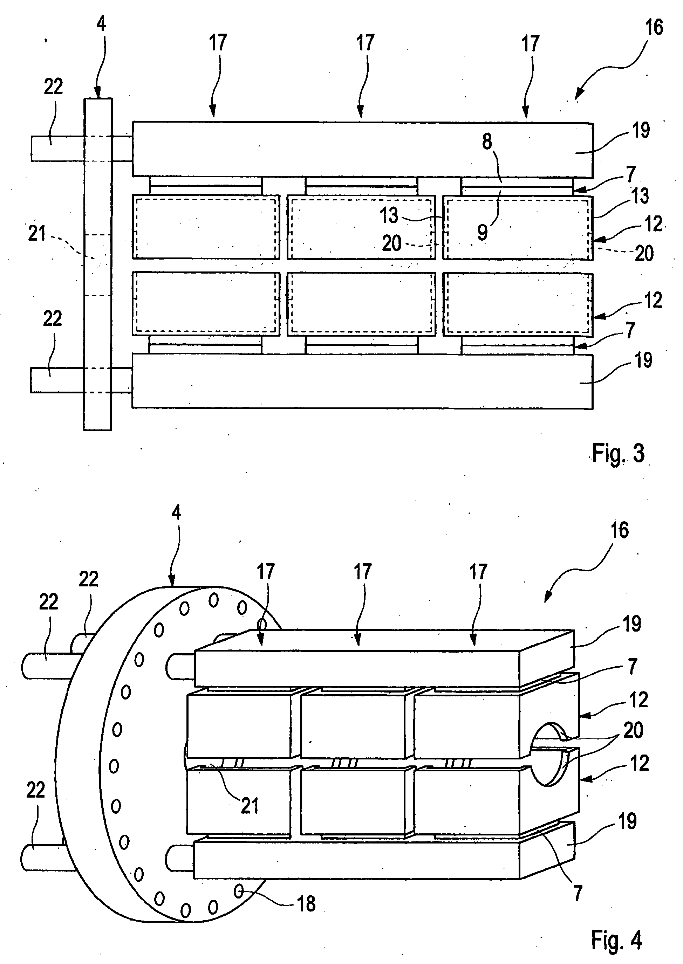

Auch auf der Kaltseite 9 der Peltier-Elemente 7 ist unter Verwendung einer thermisch leitfähigen Befestigung 10 (welche identisch oder unterschiedlich zur thermisch leitfähigen Befestigung 10 zwischen Peltier-Elementen 7 und Halteelementen 11 ausgebildet sein kann und unabhängig davon von der Befestigungsart her der vorab beschriebenen Gruppe entnommen sein kann) ein im vorliegend dargestellten Ausführungsbeispiel wannenartig gebogenes Sorptionsblech 12 angeordnet. Die Randseiten 13 der Sorptionsfläche 12 können (müssen jedoch nicht) mit einer Aussparung 20 analog zum in Figur 4, 5 und 6 gezeigten Ausführungsbeispiel von Kühlfallen versehen sein. Ein Vorteil der Randseiten 13 der Sorptionsbleche 12 besteht nicht nur darin, dass sie die insgesamt zur Verfügung stehende Sorptionsoberfläche vergrößern. Ein weiterer Vorteil der Randseiten 13 besteht darin, dass ein schräg zum Teilchenstrahl 3 einfallendes Fremdstoffteilchen (beispielsweise ein Ölpartikel) in einem stumpfen Winkel auf, eine Randseite 13 auftrifft. Dies kann in manchen Fällen die Wahrscheinlichkeit, dass das Ölteilchen auf dem Sorptionsblech 12 "kleben bleibt" erhöhen.

Wie man weiterhin Fig. 1 entnehmen kann, ist die Kühlfalle 1 aus zwei im Wesentlichen gleichartig ausgebildeten Teilbereichen mit Peltier-Elementen 7 ausgebildet. Ein erster Teilbereich besteht aus dem in Fig. 1 obenliegenden Peltier-Element 7, einschließlich dazugehörigem Halteelement 11 und wannenartigem Sorptionsblech 12. Ein zweiter Teilbereich besteht dementsprechend aus dem in Fig. 1 untenliegenden Peltier-Element 7, einschließlich dazugehörigem Halteelement 11 und wannenartigem Sorptionsblech 12. Versuche haben ergeben, dass dies eine gute Kombination aus hoher Wirksamkeit und relativ einfachem Aufbau der Gesamtvorrichtung 1 bewirkt. Lediglich die Beam-Pipe 2 und dementsprechend auch die Flanschplatte 4 sind beim in Fig. 1 dargestellten Ausführungsbeispiel kreisrund ausgeführt.

Schließlich kann man Fig. 1 auch entnehmen, dass die dort dargestellte Kühlfalle 1 geometrisch durchlässig ist, also ein geradliniger Teilchenstrahl 3 ohne auf ein Hindernis zu prallen durch die Kühlfalle 1 mittig hindurchtreten kann. Die Erfinder haben zu ihrer eigenen Verblüffung festgestellt, dass es möglich ist, trotz des einfachen Aufbaus der Kühlfalle 1 und der im Vergleich zu einer Kühlung mit flüssigem Stickstoff sehr hohen Temperatur der Sorptionsbleche 12, die mit Hilfe der Peltier-Elemente 7 erzielt werden kann (typischerweise können Temperaturen im Bereich zwischen -30 und -70 °C erzielt werden), eine gute Sperrwirkung gegenüber Kohlenwasserstoffen, die auf einer Seite der Kühlfalle 1 mit einer höheren Konzentration vorhanden sein, gegeben ist. Dieses Ergebnis steht im krassen Gegensatz zu den bisherigen Annahmen, dass bei geometrisch durchlässigen Kühlfallen eine Temperatur, wie sie mit Hilfe von Peltier-Elementen 7 erreicht werden kann, keinesfalls ausreichend ist, um eine wirksame Sperre gegenüber Kohlenwasserstoffen zu realisieren.

Im Übrigen haben die Erfinder zu ihrer weitergehenden Verblüffung festgestellt, dass die mit Peltier-Elementen 7 gekühlte Kühlfalle 1 gegenüber Kühlfallen, die mit flüssigem Stickstoff gekühlt werden, sogar den Vorteil haben kann, dass diese schneller einsatzfähig ist. Denn aufgrund des vorgeschlagenen Aufbaus der Kühlfalle können die Peltier-Elemente 7 die wannenartigen Sorptionsflächen 12 erstaunlicherweise schneller auf eine Temperatur abkühlen, bei der die Kühlfalle bereits funktionsfähig wird, als dies bei Kühlfallen, die mit flüssigem Stickstoff gekühlt werden, typischerweise der Fall ist (diese sind üblicherweise erst bei deutlich niedrigeren Temperaturen funktionstüchtig). Diese schnelle Einsatzbereitschaft liegt dabei sowohl in den Peltier-Elementen, als auch im Aufbau der Kühlfalle selbst begründet.

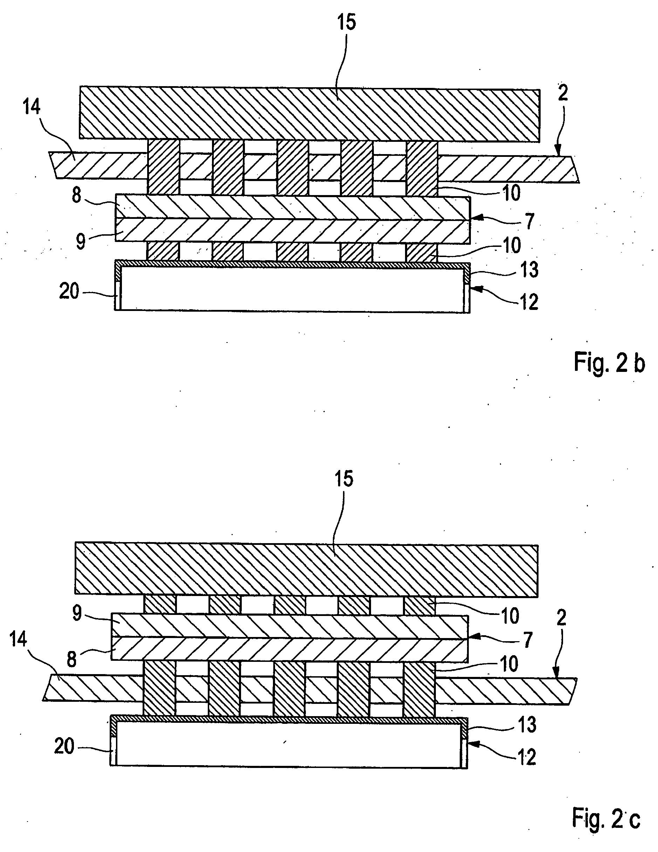

In Fig. 2 sind unterschiedliche Varianten dargestellt, wie Wärme, die auf der Warmseite 8 von Peltier-Elementen 7 entsteht (die auf der Warmseite 8 entstehende Wärmemenge korrespondiert zur Kühlleistung auf der Kaltseite 9 der Peltier-Elemente 7 und damit der Kühlleistung der Sorptionsfläche 12), nach außen - also in den Raum außerhalb der Beäm-Pipe 2 - abgeführt werden kann. Die in Fig. 2 dargestellten Anordnungsprinzipien sind nicht nur für das in Fig. 1 dargestellte Ausführungsbeispiel einer Kühlfalle 1 verwendbar, sondern auch für unterschiedlichst ausgebildete Kühlfalleneinrichtungen und gegebenenfalls auch sonstige Einrichtungen.

In Fig. 2a ist nochmals die in Fig. 1 dargestellte Einbaugeometrie dargestellt. Hier befindet sich das Halteelement 11, an dem das Peltier-Element 7 thermisch leitfähig (mit Hilfe der thermisch leitfähigen Befestigung 10) befestigt ist, innerhalb der eigentlichen Beam-Pipe 2. Die Halteeinrichtung 11 bewirkt eine thermische Verbindung zu anderen Elementen. Hierbei kann es sich nicht nur um eine Flanschplatte 4 (wie in Fig. 1 dargestellt) handeln. Vielmehr ist beispielsweise auch ein direkter thermischer Kontakt mit der Ummantelung 14 der Beam-Pipe 2 möglich. Auch kann das Halteelement 11 beispielsweise (innere) Hohlräume aufweisen, durch die ein Kühlmittel hindurchlaufen kann. Diese Hohlräume können Teil eines Kühlmittelkreislaufs sein, mit dem die an das Halteelement 11 abgegebene Wärme besonders effektiv aus dem Inneren der Beam-Pipe 2 entfernt werden kann.

In Fig. 2b ist eine weitere mögliche Anordnung dargestellt. Hier befindet sich das Peltier-Element 7 sowie das Sorptionsblech 12 innerhalb der Beam-Pipe 2. Jedoch ist die thermisch leitfähige Befestigung 10 zwischen Peltier-Element 7 und Kühlkörper 15 derart ausgebildet, dass diese eine thermische Verbindung durch die Ummantelung 14 der Beam-Pipe 2 realisiert. Beispielsweise kann es sich um durchgehende Schrauben oder aber auch um die Ummantelung 14 der Beam-Pipe 2 selbst handeln. Der Aufbau erfolgt dabei selbstverständlich derart, dass im Inneren der Beam-Pipe 2 ein Vakuum mit ausreichender Güte aufgebaut und gehalten werden kann. Der Kühlkörper 15 kann analog zu dem in Fig. 2a dargestellten Halteelement 11 ausgebildet sein. Es kann sich jedoch auch um eine abweichende Bauform handeln, wie beispielsweise um einen Kühlkörper, wie man ihn aus dem Bereich der Leistungselektronik kennt.

In Fig. 2c ist schließlich eine nochmalige Variation einer Anordnung für die Bauteile einer Kühlfalle dargestellt. Nun befindet sich das Peltier-Element 7 zusammen mit dem Kühlkörper 15 außerhalb der Ummantelung 14 der Beam-Pipe 2. Die thermisch leitfähige Befestigung 10 zwischen Sorptionsblech 12 und Peltier-Element 7 sorgt nunmehr für eine thermisch leitfähige Verbindung "durch die Ummantelung 14 der Beam-Pipe 2 hindurch".

Lediglich der Vollständigkeit halber sollte noch darauf hingewiesen werden, dass das Sorptionsblech 12 nicht nur vom in Fig. 2 dargestellten, wannenartigen Typ sein kann, sondern auch eine völlig verschiedenartige Formgebung aufweisen kann.

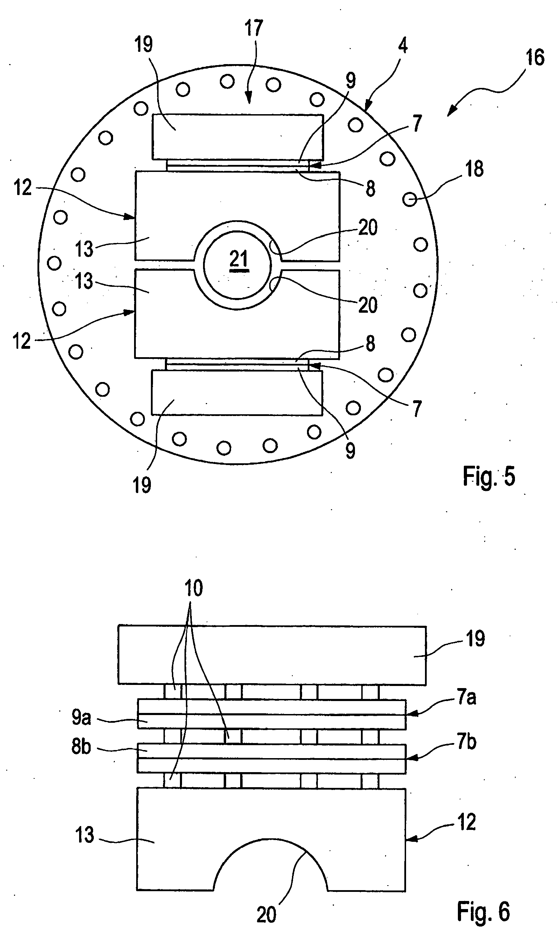

In den Figs. 3 bis 5 ist ein bevorzugtes, zweites Ausführungsbeispiel einer Kühlfalle 16 in unterschiedlichen Ansichten dargestellt. Fig. 3 zeigt dabei eine schematische Draufsicht von der Seite, Fig. 4 eine schematische, perspektivische Ansicht und Fig. 5 eine schematische Draufsicht von vorne.

Die in den Figs. 3 bis 5 gezeigte Kühlfalle 16 weist zum Teil Ähnlichkeiten mit der in Fig. 1 dargestellten Kühlfalle 1 auf, weshalb zum Teil gleichartige Bezugszeichen für ähnliche Bauteile beziehungsweise Baugruppen verwendet werden. Die Verwendung von gleichen Bezugszeichen bedeutet jedoch nicht zwangsläufig, dass identische Bauteile beziehungsweise Baugruppen vorliegen. In gleicher Weise bedeutet die Verwendung unterschiedlicher Bezugszeichen nicht notwendigerweise, dass die Bauteile beziehungsweise Baugruppen unterschiedlich ausgebildet sein müssen.

Auch beim vorliegend in den Figs. 3 bis 5 dargestellten Ausführungsbeispiel einer Kühlfalle 16 ist diese derart ausgebildet, dass sie mit Hilfe einer Flanschplatte 4, die mit einer größeren Anzahl an ringförmig angeordneten Bohrungen 18 zur Aufnahme von Befestigungsschrauben 5 versehen ist, am Flansch 6 eines Rohres (wie beispielsweise einer Beam-Pipe 2) befestigt werden kann (Rohr ist vorliegend nicht dargestellt). Zur Erhöhung der Sorptionsleistung weist die Kühlfalle 16 eine Mehrzahl von Teilsektionen 17 auf - und zwar im vorliegend dargestellten Ausführungsbeispiel drei Teilsektionen 17. Je nach äußeren Abmessungen ist es jedoch auch denkbar, die Anzahl der Teilsektionen 17 zu erhöhen beziehungsweise zu verringern. Im vorliegend dargestellten Ausführungsbeispiel weisen die Teilsektionen 17 jeweils einen kleineren Abstand von 5 mm zueinander auf. Der Abstand kann jedoch sowohl kleiner (einschließlich 0 mm), als auch größer gewählt werden. Eine typische Länge für die Kühlfalle 16 beträgt 22 cm, sodass eine einzelne Teilsektion 17 etwa eine Länge von 7 cm aufweist. Die Höhe der Kühlfalle 16 beträgt typischerweise 9 cm (zwischen den Au ßenflächen der beiden Kühlkörper 19 gemessen). Betrachtet man nur den Abstand der Außenflächen (Bodenfläche der Wanne) der jeweiligen wannenartig ausgebildeten Sorptionsbleche 12 voneinander, so ist eine Höhe von etwa.7 cm typisch.

Die einzelnen Teilsektionen 17 weisen einen Aufbau auf, der dem Aufbau des eigentlichen Kühl- und Sorptionsbereichs der in Fig. 1 dargestellten Kühlfalle 1 ähnlich ist. So ist pro Teilsektion 17 jeweils oben und unten ein wannenartiges Sorptionsblech 12 vorgesehen. An den beiden in Fig. 3 gesehenen jeweils links und rechts liegenden Randseiten 13 jedes Sorptionsblechs 12 ist jeweils eine halbkreisförmige Aussparung 20 vorgesehen. Dank dieser halbkreisförmigen Aussparung 20 kann beispielsweise ein Teilchenstrahl 3 verlustfrei durch die Kühlfalle 16 hindurchtreten, auch wenn dieser eine bestimmte endliche Dicke (nämlich von 0,5 cm oder 1 cm) aufweist. Dazu korrespondierend ist in der Flanschplatte 4 ein mittig angeordnetes Durchgangsloch 21 mit einem ähnlichen Durchmesser vorgesehen (vergleiche Fig. 5). Die wannenartigen Sorptionsbleche 12 sind jeweils über geeignete Befestigungsmittel (welche beispielsweise analog zur in Fig. 1 dargestellten Kühlfalle 1 ausgebildet sein können) mit Peltier-Elementen 7 verbunden, die ihrerseits thermisch leitfähig (gegebenenfalls unter Verwendung von thermisch leitfähigen Befestigungselementen analog zur in Fig. 1 dargestellten Kühlfalle 1) mit Kühlkörpern 19 verbunden sind. Die Kühlkörper 19 weisen in ihrem Inneren rohrleitungsartig ausgebildete Hohlräume auf. Durch diese rohrleitungsartigen Hohlräume 19 (in den

Figs. 3 bis 5 nicht dargestellt) kann beispielsweise eine Kühlflüssigkeit geleitet werden. Die Zufuhr beziehungsweise Abfuhr von Kühlmittel erfolgt durch die insbesondere in Fig. 3 und 4 erkennbaren Rohrstücke 22. Über diese Rohrstücke 22 können die Kühlkörper 19 beispielsweise in einen geschlossenen Kühlmittelkreislauf eingebunden werden. Ein derartiger geschlossener Kühlkreislauf ist heutzutage oftmals bei experimentellen Aufbauten verfügbar.

Durch die Verwendung einer Mehrzahl von Teilsektionen 17 wird die gesamte Sorptionsoberfläche der Kühlfalle 16 deutlich erhöht. Darüber hinaus wirkt die Kühlfalle 16 als sogenannte differenzielle Kühlfalle, entlang derer die Konzentration von beispielsweise in Fig. 3 auf der linken Seite, befindlichen Kohlenwasserstoff nach rechts hin sukzessive geringer wird. Im rechts von der Kühlfalle 16 befindlichen Hochvakuumbereich ist dementsprechend die Konzentration an Kohlenwasserstoffen deutlich verringert.

Im Übrigen weist die vorliegend dargestellte Kühlfalle 16 zumindest von der Grundidee her ähnliche Eigenschaften wie die in Fig. 1 dargestellte Kühlfalle 1 auf. Zur Vermeidung von Wiederholungen wird daher ergänzend auf die im Zusammenhang mit der in Fig. 1 dargestellten Kühlfalle 1 abgegebenen Erläuterungen verwiesen.

In Fig. 6 ist anhand einer schematischen Teildraufsicht von vorne skizziert, wie die Effektivität einer Kühlfalle - beispielsweise einer Kühlfalle 1 gemäß dem ersten Ausführungsbeispiel beziehungsweise einer Kühlfalle 16 gemäß dem zweiten Ausführungsbeispiel - nochmals verbessert werden kann. Hierzu werden gewissermaßen in Serie zwei Peltier-Elemente 7a, 7b verwendet, wobei die Warmseite 8b des mit den Sorptionsblech 12 verbundenen Peltier-Elements 7b mit der Kaltseite 9a des mit dem Kühlkörper 19 verbundenen Peltier-Elements 7a, beispielsweise unter Verwendung einer thermisch leitfähigen Befestigung 10, verbunden ist. Da ein einzelnes Peltier-Element 7 üblicherweise nur eine maximale Temperaturdifferenz zwischen typischerweise 50-70 °C erzeugen kann, ist die Temperatur der Sorptionsbleche 12 bei Verwendung eines einzelnen Peltier-Elements 7 aus nachvollziehbaren Gründen eingeschränkt. Werden dagegen - wie in Fig. 6 dargestellt - zwei Peltier-Elemente 7a, 7b, in Serie zueinander geschaltet, so können sich zumindest in "erster Näherung" die beiden Temperaturdifferenzen der einzelnen Peltier-Elemente 7a, 7b addieren (in der Realität fällt jedoch die Gesamttemperaturdifferenz - wie bereits erwähnt - geringer aus). Dadurch kann eine Temperaturdifferenz zwischen Kühlkörper 19 und Sorptionsblech 12 von typischerweise bis zu 100-140 °C erzielt werden. Aufgrund der entsprechend niedrigeren Temperatur des Sorptionsblechs 12 kann somit die Effektivität der resultierenden Kühlfalle nochmals höher ausfallen. Da sich die pro Zeiteinheit transportierbare Wärmemenge Q durch diese Serienschaltung typischerweise verringert, sind gegebenenfalls auch größere Peltier-Elemente 7 und/oder ist eine Parallelschaltung von Peltier-Elementen 7 erforderlich.

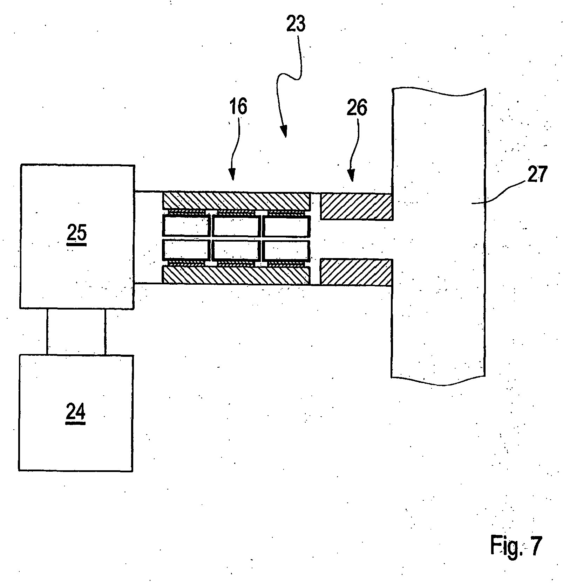

In Fig. 7 ist schließlich in einem schematischen Querschnitt eine Verwendungsmöglichkeit für eine Kühlfalle vom vorliegend vorgeschlagenen Typ - beispielsweise für das in Figs. 3 bis 6 dargestellte zweite Ausführungsbeispiel einer Kühlfalle 16 - dargestellt. Die Kühlfalle 16 ist dabei Teil einer Pumpanordnung 23, die vorliegend drei unterschiedlich ausgebildete Pumpen 24, 25, 26 aufweist. Die Pumpanordnung 23 dient beispielsweise der Evakuierung des Vakuumbereichs 27 einer technischen Anlage, beispielsweise eines Synchrotronrings. Der Vakuumbereich 27 in Fig. 7 muss dabei ein Hochvakuum beziehungsweise Ultrahochvakuum (gegebenenfalls auch ein Extremhochvakuum) aufweisen und darf insbesondere keine Verunreinigungen durch Kohlenwasserstoffe aufweisen.

Die beiden in Fig. 7 links befindlichen Pumpen 24, 25 der Pumpanordnung 23 sind Pumpen, die mechanisch bewegliche Teile aufweisen. Dabei handelt es sich vorliegend bei der Pumpe 24 um eine Drehschieberpumpe 24 und bei der Pumpe 25 um eine Turbomolekularpumpe 25. Aufgrund der mechanisch bewegten Teile der Pumpen 24, 25 ist es erforderlich, dass zu deren Schmierung ein technisches Öl verwendet wird. In an sich bekannter Weise erzeugt die Drehschieberpumpe 24 ein Vorvakuum für die Turbomolekularpumpe 25, die ihrerseits ein Hochvakuum erzeugt. Das erforderliche Ultrahochvakuum, das (im Wesentlichen) frei von Kohlenwasserstoffen sein sollte, kann dabei - in ebenfalls an sich bekannter Weise - aus einem Hochvakuum unter Verwendung von beispielsweise Getterpumpen, vorzugsweise thermisch aktivierbaren Getterpumpen 26 erzeugt werden.

Problematisch ist nun, dass der Vakuumbereich 27 möglichst frei von Kohlenwasserstoffen sein sollte. Das Gleiche gilt für den Bereich, in dem die Getterpumpen 26 angeordnet sind, da diese auf KohlenwasserstoffVerunreinigungen negativ reagieren. Andererseits ist aufgrund der technisch erforderlichen Schmierung der Turbomolekularpumpe 25 (und der Drehschieberpumpe 24) eine Freisetzung von Kohlenwasserstoff unumgänglich. Zur Lösung des Problems wird daher vorgeschlagen, zwischen die geschmierten Pumpen 24, 25 und die schmiermittelfreien Pumpen 26, eine Kühlfalle 16 anzuordnen. Die Kühlfalle 16 ist dabei von einem Typ, der - abweichend vom derzeitigen Stand der Technik - betriebsmittelfrei arbeitet. Die Kühlfalle 16 wird also nicht, wie derzeit üblich, durch flüssigen Stickstoff gekühlt. Vielmehr bedient sich die Kühlfalle 16 zur Kühlung einer Mehrzahl von Peltier-Elementen. Der weitere (mögliche) Aufbau der Kühlfalle 16 ist bereits unter Bezugnahme auf die Figs. 3 bis 5 eingehend beschrieben woden.

Im Übrigen ist auch eine "Umgruppierung" von einzelnen Elementen bzw. Baugruppen möglich. So ist es beispielsweise denkbar, dass nur die Drehschieberpumpe 24 ölgeschmiert ausgeführt ist. Die Turbomolekularpumpe 25 kann dagegen beispielsweise als magnetgelagerte Pumpe ausgeführt sein, so dass diese dementsprechend keine Kohlenwasserstoffe freisetzt. In einem derartigen Fall erweist es sich üblicherweise als vorteilhafter, wenn die Kühlfalle 16 nunmehr zwischen Drehschieberpumpe 24 und Turbomolekularpumpe 25 angeordnet wird (und nicht wie in Fig. 7 dargestellt zwischen Turbomolekularpumpe 25 und Vakuumbereich 27).

Selbstverständlich ist es (insbesondere, aber nicht nur) in den beiden vorab beschriebenen Fällen möglich, dass anstelle einer Kühlfalle 16 vom zweiten Ausführungsbeispiel auch eine Kühlfalle mit einem anders gearteten Aufbau eingesetzt wird.

### Bezugszeichenliste:

1 Kühlfalle
2 Beam-Pipe
3 Teilchenstrahl
4 Flanschplatte
5 Schrauben
6 Flansch
7 Peltier-Element
8 Warmseite von 7
9 Kaltseite von 7
10 thermisch leitfähige Befestigung
11 Halteelement
12 Sorptionsblech
13 Randseite
14 Ummantelung
15 Kühlkörper
16 Kühlfalle
17 Teilsektion
18 Bohrung
19 Kühlkörper
20 halbkreisförmige Aussparung
21 Durchgangsloch
22 Rohrstück
23 Pumpanordnung
24 Drehschieberpumpe
25 Turbomolekularpumpe
26 elektrisch aktivierbare Getter-Pumpe
27 Vakuumbereich

## Patentansprüche

1. Fremdstoffabscheidevorrichtung (1, 16) zur Abscheidung insbesondere gasförmiger Verunreinigungen durch Sorption, aufweisend zumindest eine gekühlte Sorptionsfläche (13) mit zumindest einer als Peltier-Kühleinrichtung (7) ausgebildeten betriebsmittelverbrauchsfreien Kühleinrichtung (7), wobei die zumindest eine gekühlte Sorptionsfläche (13) zumindest eine geometrisch durchlässige Durchgangseinrichtung (12, 17) bildet, die zwischen zwei Anschlussbereichen (20) der Fremdstoffabscheidevorrichtung (1, 16) angeordnet ist, und die als Öffnung oder als Serie von Öffnungen ausgebildet ist, derart dass zumindest eine unmittelbare, geradlinige Verbindung zwischen den zwei Anschlussbereichen (20) durch die Durchgangseinrichtung (12, 17) hindurch vorhanden ist, die für den mittigen Durchgang eines geradlinigen Teilchenstrahls mit einer Dicke von 0,5 cm geeignet ist, ohne dass dieser auf ein Hindernis prallt, **dadurch gekennzeichnet, dass** die zumindest eine gekühlte Sorptionsfläche (13) zumindest einen Hinterschneidungsbereich in Bezug auf die zumindest eine geradlinige Verbindung der zumindest einen geometrisch durchlässigen Durchgangseinrichtung (12, 17) aufweist.

2. Fremdstoffabscheidevorrichtung (1, 16) nach Anspruch 1, insbesondere nach Anspruch 2, **gekennzeichnet durch** eine Mehrzahl von Kühleinrichtungen (7), welche vorzugsweise zumindest teilweise sequenziell zueinander (7a, 7b) angeordnet sind.

3. Fremdstoffabscheidevorrichtung (1, 16) nach einem der vorangehenden Ansprüche, **dadurch gekennzeichnet, dass** die Fremdstoffabscheidevorrichtung (1, 16), insbesondere zumindest eine geometrisch durchlässige Durchgangseinrichtung (12, 17) zumindest teilweise und/oder zumindest bereichsweise als differentielle Kühlfalleneinrichtung (16) ausgebildet ist, bei der die Konzentration der abzuscheidenden Verunreinigungen über mehrere Stufen hinweg sukzessive abnimmt.

4. Fremdstoffabscheidevorrichtung (1, 16) nach einem der vorangehenden Ansprüche, **dadurch gekennzeichnet, dass** die zumindest eine geometrisch durchlässige Durchgangseinrichtung (12, 17), insbesondere die zumindest eine gekühlte Sorptionsfläche (13) zumindest teilweise und/oder zumindest bereichsweise Flachelemente (13), insbesondere zumindest teilweise und/oder zumindest bereichsweise gebogene Flachelemente (13) und/oder zumindest eine zumindest bereichsweise gekrümmte Begrenzungskante aufweist.

5. Fremdstoffabscheidevorrichtung (1, 16) nach einem der vorangehenden Ansprüche, insbesondere nach Anspruch 4, **dadurch gekennzeichnet, dass** die zumindest eine geometrisch durchlässige Durchgangseinrichtung (12, 17), besonders bevorzugt die zumindest eine gekühlte Sorptionsfläche (12, 13) zumindest bereichsweise zumindest eine Zwischenwandeinrichtung (13), welche zumindest zeitweise und/oder zumindest bereichsweise gekühlt ausgeführt ist, aufweist.

6. Fremdstoffabscheidevorrichtung (1, 16) nach einem der vorangehenden Ansprüche, **dadurch gekennzeichnet, dass** zumindest eine geometrisch durchlässige Durchgangseinrichtung (12, 17) zumindest zwei Baugruppen (17) aufweist, welche insbesondere zumindest teilweise
und/oder zumindest bereichsweise ähnlich zueinander, bevorzugt zumindest teilweise und/oder zumindest bereichsweise gleichartig zueinander ausgebildet sind.

7. Fremdstoffabscheidevorrichtung (1, 16) nach einem der vorangehenden Ansprüche, **dadurch gekennzeichnet, dass** die Fremdstoffabscheidevorrichtung (1, 16) zumindest ein Abwärmeabführmittel (11, 15, 19) aufweist, welches bevorzugt mit zumindest einer betriebsmittelverbrauchsfreien Kühleinrichtung (7) thermisch verbunden ist.

8. Fremdstoffabscheidevorrichtung (1, 16) nach einem der vorangehenden Ansprüche, insbesondere nach Anspruch 7, **dadurch gekennzeichnet, dass** zumindest eine Verbindung zumindest zweier Bauelemente (4, 6, 7, 12, 15, 19) untereinander, insbesondere zumindest eine thermische Verbindung zumindest zweier Bauelemente (4, 6, 7, 12, 15, 19) untereinander zumindest teilweise und/oder zumindest bereichsweise unter Verwendung von formschlüssigen Verbindungen (5, 10) und/oder von kraftschlüssigen Verbindungen (10) und/oder von Haftmitteln (10) und/oder von Andruckmitteln (5, 10) erfolgt.

9. Fremdstoffabscheidevorrichtung (1, 16) nach einem der vorangehenden Ansprüche, **dadurch gekennzeichnet, dass** zumindest Teile der Fremdstoffabscheidevorrichtung (1, 16) zumindest bereichsweise vakuumgeeignet und/oder zumindest bereichsweise vakuumdicht ausgebildet sind.

10. Pumpvorrichtung (23), aufweisend zumindest eine erste Pumpeneinrichtung (24, 25) sowie zumindest eine zweite Pumpeneinrichtung (26), **dadurch gekennzeichnet, dass** die zumindest eine erste Pumpeneinrichtung (24, 25) und die zumindest eine zweite Pumpeneinrichtung (26) zumindest teilweise und/oder zumindest bereichsweise unter Verwendung einer Fremdstoffabscheidevorrichtung (1, 16) nach einem der Ansprüche 1 bis 9 miteinander verbunden sind.

## Claims

1. Foreign matter separation device (1, 16) for separation of in particular gaseous impurities by sorption, having at least one cooled sorption surface (13) with at least one cooling device (7) free of operating material consumption and designed as a Peltier cooling device (7), where the at least one cooled sorption surface (13) forms at least one geometrically permeable passage device (12, 17) which is arranged between two connection areas (20) of the foreign matter separation device (1, 16) and is designed as an aperture or as a series of apertures, such that at least one direct and straight link between the two connection areas (20) through the passage device (12, 17) is provided that is suitable for centred passage of a straight particle beam with a thickness of 0.5 cm without said jet impacting against an obstacle, **characterized in that** the at least one cooled sorption surface (13) has at least one undercut area relative to the at least one straight link of the at least one geometrically permeable passage device (12, 17).

2. Foreign matter separation device (1, 16) according to claim 1, in particular according to claim 2, **characterized by** a plurality of cooling devices (7) which are preferably arranged at least in part sequentially to one another (7a, 7b).

3. Foreign matter separation device (1, 16) according to one of the preceding claims, **characterized in that** said foreign matter separation device (1, 16), in particular at least one geometrically permeable passage device (12, 17), is designed at least in part and/or at least in some areas as a differential cold trap device (16) in which the concentration of the impurities to be separated decreases successively over several stages.

4. Foreign matter separation device (1, 16) according to one of the preceding claims, **characterized in that** the at least one geometrically permeable passage device (12, 17), in particular the at least one cooled sorption surface (13), has at least in part and/or at least in some areas flat elements (13), in particular flat elements (13) curved at least in part and/or at least in some areas, and/or at least one limiting edge curved at least in some areas.

5. Foreign matter separation device (1, 16) according to one of the preceding claims, in particular according to claim 4, **characterized in that** the at least one geometrically permeable passage device (12, 17), in particular preferably the at least one cooled sorption surface (12, 13), has at least in some areas at least one intermediate wall device (13) which is designed cooled at least at times and/or at least in some areas.

6. Foreign matter separation device (1, 16) according to one of the preceding claims, **characterized in that** at least one geometrically permeable passage device (12, 17) has at least two assemblies (17) which in particular are designed at least in part and/or at least in some areas similar to one another, and preferably at least in part and/or at least in some areas identical to one another.

7. Foreign matter separation device (1, 16) according to one of the preceding claims, **characterized in that** the foreign matter separation device (1, 16) has at least one waste heat removal means (11, 15, 19) which is thermally connected preferably to at least one cooling device (7) free of operating material consumption.

8. Foreign matter separation device (1, 16) according to one of the preceding claims, in particular according to claim 7, **characterized in that** at least one connection of at least two components (4, 6, 7, 12, 15, 19) to one another, in particular at least one thermal link of at least two components (4, 6, 7, 12, 15, 19) to one another, is achieved at least in part and/or at least in some areas by the use of positive connections (5, 10) and/or of non-positive connections (10) and/or of adhesive means (10) and/or of pressing means (5, 10).

9. Foreign matter separation device (1, 16) according to one of the preceding claims, **characterized in that** at least parts of said foreign matter separation device (1, 16) are designed at least in some areas vacuum-suitable and/or at least in some areas vacuum-tight.

10. Pump device (23), having at least one first pump device (24, 25) and at least one second pump device (26), **characterized in that** the at least one first pump device (24, 25) and the at least one second pump device (26) are connected to one another at least in part and/or at least in some areas using a foreign matter separation device (1, 16) according to one of claims 1 to 9.

## Revendications

1. Dispositif de séparation d'impuretés (1, 16) destiné à séparer en particulier des impuretés gazeuses par sorption, présentant au moins une surface de sorption (13) réfrigérée avec au moins un dispositif réfrigérant (7) non consommateur d'agent de fonctionnement et conçu en tant que module thermoélectrique à effet Peltier (7), sachant que l'au moins une surface de sorption (13) réfrigérée forme au moins un dispositif de passage (12, 17) géométriquement perméable qui est disposé entre deux zones de raccordement (20) du dispositif de séparation d'impuretés (1, 16), et qui est formé en tant qu'ouverture ou série d'ouvertures de telle manière qu'au moins une liaison directe, rectiligne est établie à travers le dispositif de passage (12, 17) entre les deux zones de raccordement (20), laquelle liaison est adaptée au passage médian d'un faisceau de particules rectiligne épais de 0,5 cm sans qu'il se heurte à un obstacle, **caractérisé en ce que** l'au moins une surface de sorption (13) réfrigérée présente au moins une zone de contredépouille par rapport à l'au moins une liaison rectiligne de l'au moins un dispositif de passage (12, 17) géométriquement perméable.

2. Dispositif de séparation d'impuretés (1, 16) selon la revendication 1, en particulier selon la revendication 2, **caractérisé par** une pluralité de dispositifs réfrigérants (7) qui sont de préférence au moins partiellement disposés de manière séquentielle les uns par rapport aux autres (7a, 7b).

3. Dispositif de séparation d'impuretés (1, 16) selon l'une des revendications précédentes, **caractérisé en ce que** ledit dispositif de séparation d'impuretés (1, 16), en particulier au moins un dispositif de passage (12, 17) géométriquement perméable, est conçu au moins en partie et/ou au moins par zones en tant que piège réfrigérant (16) différentiel, dans lequel la concentration des impuretés à séparer décroît successivement sur plusieurs étages.

4. Dispositif de séparation d'impuretés (1, 16) selon l'une des revendications précédentes, **caractérisé en ce que** l'au moins un dispositif de passage (12, 17) géométriquement perméable, en particulier l'au moins une surface de sorption (13) réfrigérée, présente au moins en partie et/ou au moins par zones des éléments plats (13), en particulier des éléments plats (13) coudés au moins en partie et/ou au moins par zones, et/ou au moins une arête de délimitation curviligne au moins par zones.

5. Dispositif de séparation d'impuretés (1, 16) selon l'une des revendications précédentes, en particulier selon la revendication 4, **caractérisé en ce que** l'au moins un dispositif de passage (12, 17) géométriquement perméable, en particulier de préférence l'au moins une surface de sorption (12, 13) réfrigérée, présente au moins par zones au moins un dispositif de cloisonnement (13) qui est réalisé de manière réfrigérée au moins par intermittence et/ou au moins par zones.

6. Dispositif de séparation d'impuretés (1, 16) selon l'une des revendications précédentes, **caractérisé en ce qu'**au moins un dispositif de passage (12, 17) géométriquement perméable présente au moins deux modules (17) qui sont en particulier conçus similaires entre eux au moins en partie et/ou au moins par zones, de préférence identiques entre eux au moins en partie et/ou au moins par zones.

7. Dispositif de séparation d'impuretés (1, 16) selon l'une des revendications précédentes, **caractérisé en ce que** ledit dispositif de séparation d'impuretés (1, 16) présente au moins un moyen d'évacuation de la chaleur dissipée (11, 15, 19) qui est de préférence relié thermiquement à au moins un dispositif réfrigérant (7) non consommateur d'agent de fonctionnement.

8. Dispositif de séparation d'impuretés (1, 16) selon l'une des revendications précédentes, en particulier selon la revendication 7, **caractérisé en ce qu'**est établie au moins une liaison entre au moins deux composants (4, 6, 7, 12, 15, 19), en particulier au moins une liaison thermique au moins en partie et/ou au moins par zones entre au moins deux composants (4, 6, 7, 12, 15, 19), en utilisant des liaisons par complémentarité de forme (5, 10) et/ou des liaisons par force (10) et/ou des agents adhésifs (10) et/ou des moyens de pression (5, 10).

9. Dispositif de séparation d'impuretés (1, 16) selon l'une des revendications précédentes, **caractérisé en ce qu'**au moins des parties dudit dispositif de séparation d'impuretés (1, 16) sont conçues adaptées au vide au moins par zones et/ou étanches au vide au moins par zones.

10. Système de pompage (23) présentant au moins un premier dispositif de pompage (24, 25) ainsi qu'au moins un deuxième dispositif de pompage (26), **caractérisé en ce que** l'au moins un premier dispositif de pompage (24, 25) et l'au moins un deuxième dispositif de pompage (26) sont reliés entre eux au moins en partie et/ou au moins par zones en utilisant un dispositif de séparation d'impuretés (1, 16) selon l'une des revendications 1 à 9.
